# EUROPÄISCHE PATENTSCHRIFT

(11) **EP 3 482 536 B1**
(45) Veröffentlichungstag und Bekanntmachung des Hinweises auf die Patenterteilung: **19.05.2021**
(21) Anmeldenummer: 17761187.8
(22) Anmeldetag: 25.08.2017
(51) Int. Cl.: H04L 12/46, H04L 29/06, H04L 12/749, H04L 29/12

(54) **ENDANWENDERSPEZIFISCHES VIRTUELLES GLOBALES NETZWERK**
END-USER-SPECIFIC VIRTUAL GLOBAL-AREA NETWORK
RÉSEAU GLOBAL VIRTUEL SPÉCIFIQUE À L'UTILISATEUR FINAL

(30) Priorität: 26.08.2016 DE 102016010359
(43) Veröffentlichungstag der Anmeldung: 15.05.2019
(73) Patentinhaber: Telefónica Germany GmbH & Co. OHG, 80992 München (DE)
(72) Erfinder: HENRICI, Dirk, 80995 München (DE); NICOLL, Wilfred, 81375 München (DE); BUSCH, Jan, 85221 Dachau (DE)
(74) Vertreter: Herrmann, Uwe
(86) Internationale Anmeldenummer: PCT/EP2017/001020
(87) Internationale Veröffentlichungsnummer: WO 2018/036659

(56) Entgegenhaltungen:
- EP-A1- 1 298 853
- DE-A1- 19 809 824
- DE-T2-602004 011 219
- CALLON JUNIPER NETWORKS M SUZUKI NTT CORPORATION R: "A Framework for Layer 3 Provider-Provisioned Virtual Private Networks (PPVPNs); rfc4110.txt", NETWORK WORKING GROUP RFC 1717, INTERNET SOCIETY (ISOC) 4, RUE DES FALAISES CH- 1205 GENEVA, SWITZERLAND, CH, 1. Juli 2005 (2005-07-01), XP015041891,

## Beschreibung

Die vorliegende Erfindung betrifft ein endanwenderspezifisches virtuelles globales Netzwerk.

Idealerweise hätte jeder Endanwender sein eigenes Netzwerk, in dem alle jeweiligen Endgeräte des Endanwenders verbunden wären. Dieses Netzwerk würde den Computer, das Notebook, ein Mobiltelefon, ein Tablet - sowohl zu Hause als auch mobil - miteinander verbinden. Darüber hinaus würden in einem solchen Netzwerk auch die Haushaltsgeräte des Endanwenders wie Geräte zur Medienwiedergabe oder ein Netzwerkspeicher, Wearables oder das Auto des Endanwenders verbunden sein. Dieses Netzwerk würde sich auch dazu eignen, in der Zukunft noch aufkommende Internet-der-Dinge-Vorrichtungen einzubinden.

Aus Endanwendersicht sollte dieses Netzwerk so privat wie ein drahtloses Heimnetzwerk sein, auf das nur durch den Endanwender autorisierte Vorrichtungen zugreifen können. Andererseits sollte dieses Netzwerk jedoch nicht auf einen beschränkten Bereich begrenzt bleiben, vielmehr sollte es landesweit wenn nicht sogar weltweit verwendbar sein. Es wäre wünschenswert, wenn mobile Endgeräte Teilnehmer dieses privaten Netzwerks werden und bleiben könnten unabhängig davon, wo sie sich befinden und wohin sie sich bewegen. Vorteilhaft wäre, wenn dieses Netzwerk verschiedene Zukunftstechnologien wie Festnetz, WLAN, mobile Netzwerke, Bluetooth und weitere kombinieren würde.

Aus praktischen Gründen ist es jedoch nicht möglich, ein separates globales Netzwerk für jeden Endanwender aufzubauen. Nichtsdestotrotz wird mit Hilfe dieser Erfindung ein endanwenderspezifisches virtuelles globales Netzwerk möglich, das die oben aufgezählten Eigenschaften besitzt und das heute verfügbare unterschiedlichste Netzwerkinfrastruktur wie das Internet oder Mobilfunknetzwerke verwenden kann. Anders ausgedrückt soll das endanwenderspezifische virtuelle globale Netzwerk dazu in der Lage sein, auf einer "shared infrastructure", also eine Infrastruktur, die von mehreren Anwendern gleichzeitig benutzt werden kann, zu laufen. Dabei ist es das Ziel der vorliegenden Erfindung, dass jedes der heute verfügbaren Endgeräte Teilnehmer eines solchen endanwenderspezifischen virtuellen globalen Netzwerks sein kann, ohne dass es erforderlich ist, eine spezielle Clientsoftware aufzuspielen oder andere Änderungen daran vorzunehmen. Darüber hinaus soll das erfindungsgemäße Netzwerk IP-basierte Kommunikation unterstützen, d.h. die Endgeräte sollen dazu in der Lage sein, mit dem Internetprotoll IPv4 und IPv6 zu kommunizieren. Jeder zusätzliche darüber hinaus anfallende Overhead soll vermieden werden und es soll keine ungewollten Beschränkungen bezüglich Verbindbarkeit und Erreichbarkeit geben.

Kernpunkt des endanwenderspezifischen virtuellen globalen Netzwerks ist dabei die logische Trennung bzw. die logische Separierung von Endanwendern auf einer potenziell gemeinsamen Infrastruktur (= shared infrastructure). Im Stand der Technik gibt es hierfür eine Vielzahl von Ansätzen, die auf das vermeintliche Lösen dieses Problems gerichtet sind.

So gibt es im Stand der Technik den Ansatz, Endanwender von einer gemeinsamen Infrastruktur unter Verwendung von VPN-Lösungen zu separieren. In diesem Szenario besitzt der der Endanwender Equipment oder eine Software, die über die gemeinsame Infrastruktur (normalerweise das Internet), welche die Serverseite bildet, erreichbar ist. Von einem anderen Ort oder mit einem mobilen Endgerät wird Equipment oder Software als Client-Seite verwendet und ein sicherer Tunnel zu der Serverseite aufgebaut. Über diesen Tunnel kann sichere Kommunikation über die gemeinsame Infrastruktur durchgeführt werden. Bspw. ist das IPsec Protokoll und das SSL/TLS-Protokoll eine weit verbreitete Möglichkeit, um einen solchen sicheren VPN-Tunnel aufzubauen.

Bei der DE 198 09 824 A1 beschriebenen Lösung erfolgt bspw. die Filterung und Trennung der Datenpakte auf Grundlage von Routing-Informationen anhand der VPN-ID-Bits, was der üblichen Vorgehensweise bei der Implementierung sogenannter MPLS-VPN entspricht.

Nachteilig an dieser Lösung ist, dass ein VPN-Client notwendig ist und dass der virtuelle Tunnel der Kommunikation einen Overhead hinzufügt. Darüber hinaus befindet sich die Serverseite typischerweise in Räumlichkeiten des Endanwenders oder läuft auf physikalischen oder virtuellen Maschinen in einem Datencenter. Auch ist es typisch, dass das serverseitige Equipment/die serverseitige Software nicht von mehreren Endanwendern gemeinsam genutzt wird. Zudem ist dieser Stand der Technik oder auch Alternativen hierzu nur in sehr komplexer Weise aufzusetzen, so dass ein großer Installations- und Wartungsaufwand beim Betrieb erforderlich ist. Dies trägt teilweise auch dazu bei, dass Umsetzungen aus dem Stand der Technik für den Massenmarkt nicht skalierbar sind.

Ein weiterer im Stand der Technik verbreiteter Ansatz ist die Verwendung von virtuellen Verbindungen sogenannten "virtual circuits" zum Trennen der Endanwender. Mit Mehrfachzugriffsverfahren wie TDMA kann ein einziges Kommunikationsmedium wie eine Kupferleitung für darauf zugreifende Einheiten so erscheinen, als ob jede Einheit ein eigenes Kommunikationsmedium (mit entsprechend verringerter Kapazität) besitzt.

Um diese Möglichkeiten durchgängig zu gestalten, d.h. über mehrere Netzwerkssegmente mit zwischengeschalteten Netzwerkknoten, wurden Technologien geschaffen, die der Erzeugung von sogenannten virtuellen Verbindungen ermöglichen. Diese erlauben das Erstellen von sauber getrennten logischen Kommunikationspfaden auf einer einzigen physikalischen Infrastruktur. Die "Frame Relay" Technologie ist ein prominentes Beispiel, die für diesen Zweck eingesetzt wird. Ein ähnliches Konzept findet sich auch bei ATM (Asynchronous Transfer Mode), in dem virtuelle Pfade und virtuelle Verbindungen aufgesetzt werden können.

Zwar erlauben die oben aufgeführten Technologien das Verwenden von Infrastruktur, die durch mehrere Endanwender genutzt wird, jedoch sind die Endpunkte einem einzigen Endanwender vorbehalten.

Ähnliche Nachteile ergeben sich auch bei der Verwendung von MPLS-VPNs oder dem Einsatz eines Overlay-Protokolls wie VXLAN.

Es ist daher das Ziel der vorliegenden Erfindung ein endanwenderspezifisches virtuelles globales Netzwerk umzusetzen, das die vorstehend aufgeführten Nachteile überwindet.

Dies gelingt mit einem endanwenderspezifischen virtuellen globalen Netzwerk, das sämtliche Merkmale nach Anspruch 1 umfasst. Demnach weist das erfindungsgemäße Netzwerk mindestens ein netzwerkfähiges Endgerät eines Endanwenders, eine Datenbank mit einem Verzeichnis für jeden der vorzugsweise mehreren Endanwender, in dem mehrere netzwerkfähige Endgeräte des jeweiligen Endanwenders mit ihrer zugehörigen IP-Adresse hinterlegt sind, und eine Entscheidereinheit auf, die dazu ausgelegt ist, festzulegen, welches der Endgeräte untereinander und/oder mit anderen Netzwerken in Kommunikation treten darf. Zudem wird hierbei eine von dem Endgerät ausgehende und/oder an das Endgerät gerichtete Kommunikation über die Entscheidereinheit geroutet, wobei die Entscheidereinheit unter Rückgriff auf die Datenbank den Datenverkehr unterschiedlicher Endanwender aufgrund eines endanwenderspezifischen Merkmals im Datenverkehr trennt.

Dadurch ist es möglich, eine Kommunikation von Endgeräten, die lediglich durch ihre Fähigkeit, Teilnehmer in einem Netzwerk zu sein, ausgezeichnet sind, zu unterbinden, falls dies gewünscht sein sollte. Auch wird eine nichtautorisierte Kommunikation von und mit dem Endgerät wirksam unterbunden. Vorteilhaft ist dies insbesondere für ressourcenarme Internet-der-Dinge-Vorrichtungen, da diese Vorrichtungen einen effektiven Schutz von Angreifern aus dem Internet durch geeignete Infrastruktur benötigen, jedoch für autorisierte Kommunikationspartner voll erreichbar bleiben sollen. Solche Endgeräte sollen dabei auch in der Lage sein, Verbindungen zu initiieren oder Pakete an einen zulässigen Kommunikationspartner zu senden bzw. eingehende Verbindungen entgegenzunehmen oder Pakete von einem zulässigen Kommunikationspartner erhalten zu können.

Es gibt daher keinen Bedarf für Behelfslösungen, wie bspw. das Offenhalten von Kommunikationsverbindungen, unter Verwendung von darauf aufgesetzten Protokollen, um die direktionale Kommunikation zu ermöglichen. Da solche Behelfslösungen nicht weiter verfolgt werden müssen, schont dies zudem die Ressourcen.

Darüber hinaus entfällt der Bedarf für das nicht notwendige Aufbauen einer Verbindung. Es können so genannte "fire and forget"-Protokolle wie UDP für Kommunikation in beide Richtungen verwendet werden.

Nach einer optionalen Modifikation der Erfindung wird die von dem Endgerät ausgehende und/oder an das Endgerät gerichtete Kommunikation über die Entscheidereinheit gemäß einer Nabe-Speiche-Architektur geroutet, bei der die Entscheidereinheit die Nabe darstellt.

Durch diese Architektur wird ermöglicht, dass die Entscheidereinheit festlegen kann, welches der mit der Entscheidereinheit in Verbindung stehenden Endgeräte in welcher Form kommunizieren kann. So kann dadurch bspw. eine in der Datenbank nicht hinterlegte Kommunikationsverbindung unterbunden werden, indem die Entscheidereinheit eine Kommunikationsanfrage nicht weiterleitet.

Nach einer Fortbildung der Erfindung ist die Entscheidereinheit bei der Festlegung, welches der Endgeräte untereinander und/oder mit anderen Netzwerken in Kommunikation treten darf, einstellbar, vorzugsweise über eine von dem Endanwender zugreifbaren Schnittstelle, sodass die Zulässigkeit eines Kommunikationspfads zwischen Endgeräten und/oder anderen Netzwerken durch den Endanwender vorgebbar ist.

Nach der Erfindung ist vorgesehen, dass die Entscheidereinheit dazu ausgelegt ist, das Trennen des Datenverkehrs unterschiedlicher Endanwender basierend auf dem Merkmal Quell-IP-Adresse und/oder Ziel-IP-Adresse vorzunehmen.

Dadurch wird in einfacher Art und Weise sichergestellt, dass nur in der Entscheidereinheit autorisierte Kommunikationsendpunkte, deren Quell-IP-Adresse und/oder Ziel-IP-Adresse als zulässig hinterlegt ist, in eine Kommunikation mit dem Endgerät treten kann. Eine von einem Dritten ausgehende, ungewollte Kontaktanfrage an ein Endgerät, das vielleicht über keine ausreichenden Abwehrmechanismen verfügt, kann dadurch unterbunden werden.

Nach einer weiteren vorteilhaften Modifikation des Netzwerkes kann v die Entscheidereinheit das Trennen des Datenverkehrs unterschiedlicher Endanwender basierend auf der Klassifizierung eines "Service Function Chaining"-Classifiers vornehmen.

Eine "Service Function Chain" stellt dabei eine geordnete Reihenfolge von Dienstfunktionen dar, die als Ergebnis einer Klassifikation auf Pakete, Frames oder Datenströme anzuwenden ist. Beispiele einer abstrakten Dienstfunktion ("Service Function") sind unter anderem eine Firewall, eine Anwendungsbeschleunigung ("application acceleration"), ein Serverlastausgleich ("server load balancing") oder eine Deep Packet Inspection, auch DPI.

Die Klassifikation eines Pakets, eines Frames oder eines Datenstroms in Bezug auf eine zu durchlaufende "Service Function Chain" kann dabei endanwender-, netzwerk- oder dienstspezifisch vorgesehen sein. Der dem Datenverkehr dann zugeordnete Klassifikator ("Classifier") in Bezug auf eine "Service Function Chain" wird nach der vorteilhaften Ausführung der Erfindung dazu genutzt, eine Trennung von Datenverkehr unterschiedlicher Endanwender durchzuführen.

Vorzugsweise führt die Entscheidereinheit das Trennen des Datenverkehrs unterschiedlicher Endanwender durch separate Routingtabellen aus. Dabei kann vorgesehen sein, dass die separaten Routingtabellen für vom Endgerät ausgehende und an das Endgerät gerichtete Kommunikation unterschiedlich sind.

Weiter kann nach einer optionalen Modifikation der Erfindung vorgesehen sein, dass das Klassifizieren und Trennen des Datenverkehrs nicht durch die Entscheidereinheit selbst ausgeführt, sondern an dezentrale Hilfseinheiten delegiert wird.

Demnach umfasst die Entscheidereinheit eine Vielzahl von Hilfseinheiten, die dezentral in dem Netzwerk angeordnet sind und die Funktionalität der Entscheidereinheit umsetzen. Es ist nicht notwendig, dass die Entscheidereinheit durch genau eine Einheit verkörpert ist, sondern es ist auch von der Erfindung umfasst, dass sie durch mehrere dezentral angeordnete Hilfseinheiten umgesetzt ist.

Ferner kann vorgesehen sein, dass die Entscheidereinheit dazu ausgelegt ist, endanwenderspezifische IPv4-Datenpakete mit über mehrere Endanwender hinweg nicht eindeutigen IPv4-Adressen zustandslos unter Rückgriff auf die Daten der Datenbank auf endanwenderspezifische Weise in endanwenderspezifische IPv6-Datenpakete zu übersetzen, um Adresseindeutigkeit über mehrere Endanwender hinweg herzustellen und die Pakete somit ohne weitere Kennzeichnung oder Tunnel über eine gemeinsame Netzwerkinfrastruktur leiten zu können.

Somit ist eine Aktualisierung von lediglich IPV4-fähigen Teilnehmern nicht zwangsläufig notwendig, da die Eindeutigkeit der Adressierung in einem IPv6-Umfeld durch die Entscheidereinheit hergestellt werden kann.

Nach einer weiteren Modifikation der Erfindung umfasst die Entscheidereinheit die Funktionalitäten eines Routers und/oder eines anderen Kommunikationsendpunkts wie ein Switch umfasst.

Innerhalb der anwenderspezifischen Netzwerkumgebung der Entscheidereinheit können Datentunnel enden. Dies ist insbesondere für ohnehin vorhandene teilnehmerspezifische Tunnel (etwa L2TP und PPPoE) sinnvoll, da sich dann kein zusätzlicher Overhead ergibt und dennoch innerhalb des jeweiligen Tunnels beliebige IP-Adressen verwendet werden können.

Zudem kann vorgesehen sein, dass die Entscheidereinheit dazu ausgelegt ist, Prozesse in einer anwenderspezifischen Netzwerkumgebung auszuführen, vorzugsweise um einen Endpunkt für virtuelle Datentunnel darzustellen.

Auch kann vorgesehen sein, dass in dem Netzwerk mehrere Entscheidereinheiten vorgesehen sind, vorzugsweise um eine redundante Ausführung zu schaffen.

Nach einer weiteren optionalen Modifikation der Erfindung ist die Entscheidereinheit dazu ausgelegt, für eine adressbasierte Trennung ein Policy-basiertes Routingverfahren und/oder Routinglisteneinträge mit Quelladressfilter zu verwenden, vorzugsweise um ein bestimmtes Ziel auf Grundlage der Quell-IP-Adresse zu wählen.

Weiter kann nach der Erfindung die Entscheidereinheit dazu ausgelegt sein, auf einer gemeinsamen Infrastruktur abzulaufen, vorzugsweise in Form einer virtuellen Einheit.

Nach einer weiteren Variation der Erfindung wird in der Datenbank einem mobilfunkfähigen Endgerät eine pseudostatische oder statische IP-Adresse zugewiesen, um anhand einer IP-Adresse ein Netzwerkinterface zu identifizieren und den für ein Endgerät bestimmten Datenverkehr zu separieren bzw. zu trennen.

Nach einer weiteren Modifikation der Erfindung unterstützt die Entscheidereinheit das IPv4-Protokoll und/oder das IPv6-Protkoll.

Optional umfasst die Entscheidereinheit einen Mobile-IP-Heimagenten.

Nach einer Fortbildung der Erfindung umfasst die Datenbank ferner ein Verzeichnis, in dem ein IPv4-Endgerät mit einer jeweiligen IPv6-Adresse verknüpft ist, und wobei die Entscheidereinheit dazu ausgelegt ist, ein an das IPv4-Endgerät gerichtetes IPv6-Datenpaket unter Rückgriff auf die Datenbank auf ein IPv4-Datenpaket abzubilden.

Nach einer Fortbildung umfasst die Datenbank ferner ein Verzeichnis, in dem der IPv6-Quell-IP-Adresse, die in einer Kommunikation mit einem IPv4-Endgerät steht, mit einer IPv4-Quell-IP-Adresse verknüpft ist und die Entscheidereinheit beim Weiterleiten einer Kommunikation von IPv6 nach IPv4 dazu ausgelegt ist, sowohl die IPv6-Quell-IP-Adresse als auch die IPv6-Ziel-IP-Adresse unter Rückgriff auf die Datenbank eins zu eins auf IPv4-Adressen abzubilden.

Nach einer weiteren Modifikation der Erfindung wird die Abbildung von IPv6-Adressen auf IPv4-Adressen dynamisch vor dem Erstellen einer Verbindung in dem Verzeichnis zugewiesen.

Vorzugsweise ist eine Kommunikation zwischen Entscheidereinheiten möglich, insbesondere ohne diese Kommunikation über das Internet zu führen.

Vorzugsweise umfasst die Entscheidereinheit die Funktionalitäten einer Firewall.

Zudem kann vorgesehen sein, dass Kommunikation zwischen mehreren Entscheidereinheiten möglich ist, insbesondere ohne diese Kommunikation über das Internet zu führen.

Denkbar ist hierbei eine optische, drahtgebundene oder drahtlose Kommunikation zwischen mehreren Entscheidereinheiten oder auch zwischen dezentralen Hilfseinheiten einer Entscheidereinheit.

Weitere Merkmale, Details und Vorteile der Erfindung werden anhand der nachfolgenden Figurenbeschreibung ersichtlich. Dabei zeigen:

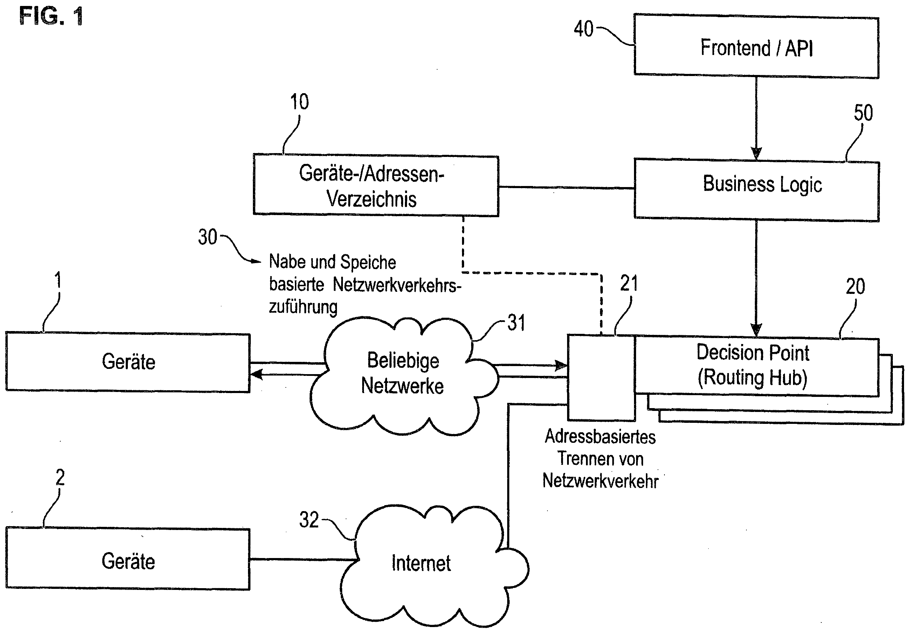

- Fig. 1:: den grundsätzlichen Aufbau des erfindungsmäßen endanwenderspezifischen virtuellen globalen Netzwerks, und

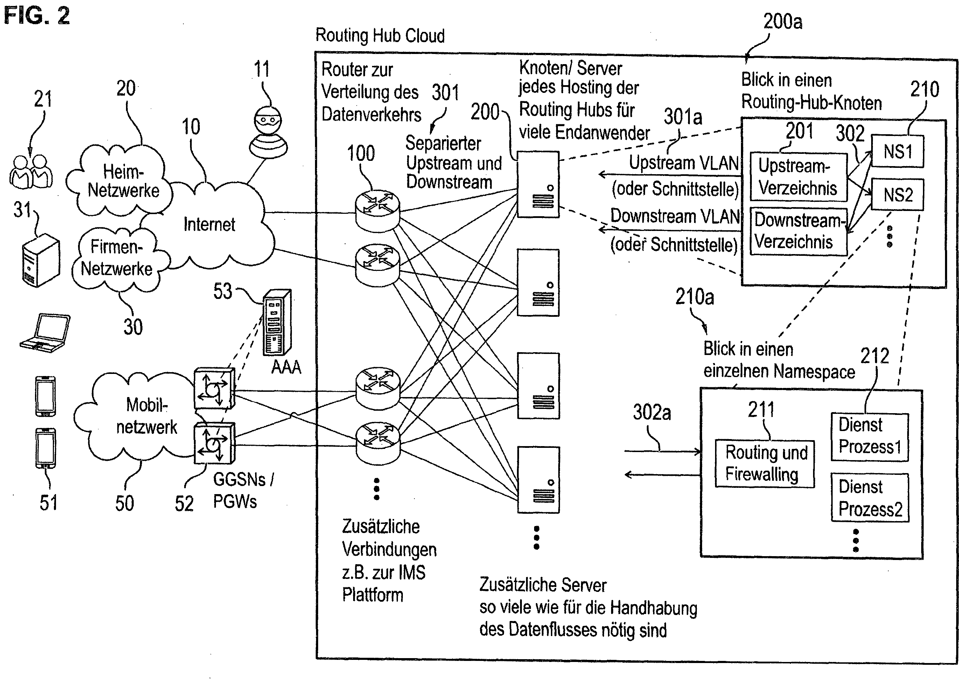

- Fig. 2:: die Implementierung der Erfindung mit mehreren Entscheidereinheiten, die mit dem Internet und einem Mobilnetzwerk verbunden ist.

Man erkennt, dass Endgeräte 1, 2 über das Internet 32 oder beliebige andere Netzwerke 31 mit der Entscheidereinheit 20, die in der Figur auch als Decision Point oder Routing Hub gekennzeichnet ist, verbunden sind. Die Entscheidereinheit 20 steht mit der Datenbank 10 in einer Verbindung, die über die gestrichelte Linie dargestellt ist.

Die Datenbank 10 weist ein Verzeichnis pro Endanwender auf, in dem die mehreren Endgeräte 1, 2 eines Endanwenders aufgelistet sind. Es wird also für jeden Endanwender ein Verzeichnis angelegt, in dem die einem Endanwender zuordenbaren Endgeräte mit ihren IP-Adressen enthalten sind. Darüber hinaus werden auch die IP-Adressen, die einem Endanwender zugewiesen werden, in dem Verzeichnis abgelegt.

Die Entscheidereinheit 20 kann flexibel konfiguriert werden, um festzulegen, welche Endgeräte eines Endanwenders untereinander und/oder mit anderen Netzwerken kommunizieren dürfen. Hierzu kann ein Endanwender auf die Entscheidereinheit 20 zugreifen und diese so konfigurieren, dass er die Berechtigungen für seine Endgeräte/Netzwerke einstellen kann. Diese Konfiguration stellt sicher, dass nur eine gewünschte Kommunikation aufgebaut werden kann. D.h. der Endanwender besitzt die Kontrolle, welche seiner Endgeräte mit welchen anderen Endgeräten kommunizieren. Dabei kann auch eingestellt werden, dass eine Kommunikation mit Endgeräten erfolgen kann, die nicht unter der Kontrolle des Endanwenders stehen.

Die Endgeräte 1 sind gemäß einer Nabe-Speiche-Architektur miteinander verbunden. Eine direkte Kommunikation der Endgeräte 1 untereinander und zu Geräten 2 ist nur über den Umweg der Entscheidereinheit 20 möglich. Dadurch wird sichergestellt, dass Datenverkehr zwischen den Endgeräten 1 und der Entscheidereinheit 20 keine ungewollten Abkürzungen nimmt, die dazu führen würden, dass die Entscheidereinheit 20 umgangen wird. Dies ist insbesondere relevant für Datenverkehr, der nicht mit Hilfe von anderen Mitteln eine Separierung je Endanwender vornehmen kann (bspw. gekapselt in einem Tunnel wie L2TP mit der Entscheidereinheit als Endpunkt). Das Nabe-Speiche-Konzept wird durch das Vorsehen von separaten Routing-Tabellen für Upstream-Verkehr und für Downstream-Verkehr implementiert.

Der mit dem Bezugszeichen 21 gekennzeichnete Bestandteil der Entscheidereinheit 20 dient für das adressbasierte Trennen von Netzwerkverkehr pro Endanwender auf einer gemeinsamen Infrastruktur. Anders als im Stand der Technik wird der Verkehr nicht durch Kennzeichnen des Datenverkehrs mit einer Zusatzkennung, die den Endanwender kennzeichnet, separiert, wie dies bspw. mit VLAN IDs oder mit Endanwenderbezeichnung in MPLS-VPNs der Fall ist. Die Erfindung sieht davon abweichend vor, Datenverkehr verschiedener Endanwender auf Grundlage einer Ziel- und/oder einer Quell-IP-Adresse zu separieren bzw. auseinander zu halten. Dies verhindert Overhead und ist ressourcenfreundlich in Bezug auf die Erfordernisse des Netzwerkequipments, da die Speicheranforderungen signifikant geringer sind.

Damit dieses Konzept reibungslos abläuft, muss entweder die Quelladresse oder die Zieladresse eines Kommunikationspfads mit einem bestimmten Endanwender verknüpft sein. Dabei ist es erforderlich, dass entweder die Quelladresse oder die Zieladresse statisch einem bestimmten Teilnehmer zum Zeitpunkt des Datenverkehrs zugewiesen ist. Dies bedeutet, dass entweder die Quelle, das Ziel oder beide in dem Verzeichnis der Datenbank 10 für den Endanwender enthalten sein müssen. Durch die Verwendung dieses adressbasierten Trennkonzepts kann die oben beschriebene Entscheidereinheit auch auf einer gemeinsamen Infrastruktur implementiert werden. Eine gemeinsame Infrastruktur oder auch "shared infrastructure" beschreibt dabei eine Infrastruktur, auf die mehrere Endanwender gleichzeitig zugreifen können.

Über ein Web-Frontend oder eine API 40 werden dem Endanwender Einstellmöglichkeiten der Entscheidereinheit 20 ermöglicht. Es ist damit möglich die Kommunikationspfade, die zwischen den Endgeräten zulässig sind, flexibel einzustellen. Aus technischer Sicht ist es hierzu erforderlich, dass eine softwarebasierte Einstellung von Datenverkehrsströmen (Routing-Tabellen, Routing-Policies, Firewall-Regeln, etc.) vorgenommen wird. Für Fälle, in denen Netzwerkequipment konfiguriert ist, das zu einer gemeinsamen Infrastruktur gehört, stellt die Business-Logic 50 sicher, dass jeder Endanwender nur solche Kommunikationspfade einstellen kann, die seine eigenen Endgeräte betreffen und nur die entsprechenden Listeneinträge in der Datenbank, die einen Bezug zu dem Endanwender haben, umgestellt werden können. Außerdem erlaubt die Business-Logic 50 Netzwerkequipment unterschiedlicher Hersteller transparent für die Endanwender zu nutzen.

Damit die Entscheidereinheit, auch Routing Hub genannt, wirklich vielseitiger ist, ist es nicht ausreichend die Datenströme zu steuern und zu beschränken. Es ist auch erforderlich einen Endpunkt für Datenverkehrstunnel vorzusehen, um einen Endpunkt für VPNs (in diesem Fall kann die Entscheidereinheit neben Routing auch Bridging vornehmen) oder einen Endpunkt für andere Kommunikationsdienste (bspw. einem IMS-client) darzustellen. Daher ist es erforderlich, die Fähigkeit zu besitzen, Prozesse in einer endanwenderspezifischen Umgebung zu betreiben, ähnlich wie ein Server-Daemon.

Ist es erforderlich eine hohe Anzahl von Endanwender zu unterstützen, ist es nicht mehr möglich sämtliche Endanwender über eine einzelne Entscheidereinheit zu bedienen. Vielmehr ist notwendig, die Gesamtlast auf mehrere Knoten bzw. Entscheidereinheiten aufzuteilen. Damit dies funktioniert, muss der Netzwerkverkehr für einen bestimmten Endanwender zu dem Knoten geleitet werden, auf dem die Entscheidereinheit des Endanwenders läuft. Daher kann eine Verkehrsleitschicht hinzugefügt werden, die den Datenverkehr an den richtigen Knoten verteilt. Diese Verkehrsleitschicht verwendet die bereits beschriebenen Konzepte, wie die Nabe-Speicher-Architektur und adressbasierte Endanwendertrennung. Für die adressbasierte Trennung muss ein spezifisches Ziel wie eine bestimmte Entscheidereinheit aufgrund der Quell-IP-Adresse ausgesucht werden. Dies kann man entweder unter Verwenden eines sogenannten policybasierten Routings oder durch das Verwenden von Routinglisteneinträgen ausführen, die einen Quelladressfilter besitzen. Beide Merkmale werden normalerweise zum Implementieren einer Lastteilung und zum Definieren spezieller Datenverkehrsregeln verwendet.

Damit die adressbasierte Trennung funktioniert, muss es auf Grundlage der Endgeräteadresse möglich sein, festzulegen, ob ein Endgerät einem Endanwender gehört oder nicht. Der einfachste Weg dies zu erreichen, ist es immer dieselbe IP-Adresse demselben mobilen Teilnehmer zuzuweisen (bspw. basierend auf MSISDN oder der SIM-Karte). Damit besitzt jeder mobile Teilnehmer, bspw. ein Mobiltelefon oder dergleichen, eines Endanwenders immer dieselbe IP-Adresse, so dass diese dazu verwendet werden kann, den Endanwender zu identifizieren und seinen Datenverkehr zu separieren. Diese stabile Abbildung zwischen mobilem Teilnehmer (mobile subscription) und IP-Adresse wird in der Datenbank in dem entsprechenden Verzeichnis festgehalten.

Die endanwenderspezifische Entscheidereinheit kann entweder nur IPv4, nur IPv6 oder beide Protokollversionen parallel unterstützen. Wird sowohl IPv4 als auch IPv6 unterstützt, kann die Entscheidereinheit verschiedene IPv4-IPv6 Migrationsoptionen und Mischformen aufweisen. Durch die Fähigkeiten eines Network-Namespacings und das Bearbeiten von Prozessen werden auch Migrationsoptionen unterstützt, die eine Abbildungskomponente erfordern.

Darüber hinaus kann die Entscheidereinheit einen "mobilen IP-Heimagenten" betreiben.

Das IPv6-Protokoll kann eine hohe Anzahl von Hosts beherbergen, wohingegen der IPv4-Adressraum streng beschränkt ist. Nichtsdestotrotz gibt es eine große Anzahl von Endgeräten, die nicht IPv6-kompatibel sind. IPv6-Header sind größer als IPv4-Header, so dass IPv6 der Kommunikation einen größeren Overhead hinzufügt. Schlimmer noch, viele Netzwerkbibliotheken für ressourcenknappe, eingebettete Endgeräte unterstützen weiterhin nur IPv4 - auch wenn sich die Gesamtsituation verbessert. Daher kann man für Maschine-zu-Maschine Kommunikation und für Internet-der-Dinge-Endgeräte annehmen, dass IPv4 in der nächsten Zeit weiterhin eine signifikante Rolle einnimmt.

Unter der Annahme, dass der Endanwender die Wahl trifft, die Entscheidereinheit derart einzustellen, dass diese nur IPv6-kompatibel ist, bedingt dies zwar die Verfügbarkeit eines großen Adressraums, jedoch ist die Kommunikation mit IPv4-Endgeräten nicht ohne weiteres möglich. Jedoch kann auch in diesem Szenario eine Kommunikation mit Netzwerkinseln vorgenommen werden, die nur über IPv4-Endgeräte verfügen. All diesen Endgeräten würde dann eine IPV6-Adresse zugewiesen werden, die dazu verwendet wird, das Endgerät (auch in dem Verzeichnis der Datenbank) zu identifizieren und mit ihm zu kommunizieren. Bei der Kommunikation mit der Netzwerkinsel können IPV6-Pakete auf IPv4-Pakete mit Hilfe einer Eins-zu-eins-Abbildung abgebildet werden. Hierbei muss man beachten, dass dem anderen Kommunikationsteilnehmer intern auch eine IPv4-Adresse zuzuweisen ist, so dass sowohl die Quell- als auch die Ziel-Adresse des IPv6-Standard eins zu eins auf IPv4-Adressen abgebildet werden.

Eine solche Eins-zu-eins-Abbildung ist eine sehr einfache Methode, um weiterhin IPv4 für mobile Endgeräte zu unterstützen, wenn diese von einem IPv6-Netzwerk oder entsprechenden Endgeräten zugreifbar sind. Bspw. in einem Mobilnetzwerk können IPv4-Mobilteilnehmer private IPv4-Adressen pseudostatisch oder statisch zugewiesen werden, während die Entscheidereinheit bereits auf IPv6 arbeitet. Dies ist auch eine interessante Option für den Fall, dass die Netzwerkinsel IPv6 noch nicht unterstützt. Dies ist z. B. dann der Fall, falls das Mobilnetzwerk noch nicht IPv6-ready ist. Eine solche Eins-zu-eins-Abbildung ist auch praktisch um IPv6-Vorrichtungen in der Entscheidereinheit von IPv4-Internet, das eine öffentliche IPv4-Adresse verwendet, zugreifbar zu machen.

Öffentliche IPv4-Adressen sind eine sehr knappe Ressource. Nichtsdestotrotz werden diese weiterhin im Internet stark genutzt und viele Teile des Internets sind noch nicht auf IPv6 umgestellt. Wie bereits im vorstehend Paragraphen erwähnt, können Endgeräte mit IPv6-Adressen zugreifbar über öffentliche IPv4-Adressen gemacht werden, in dem eine statische Eins-zu-eins-Abbildung vorgenommen wird, die die Entscheidereinheit mithilfe eines Listeneintrags in der Datenbank vornimmt. Mit der Fähigkeit die Entscheidereinheit über die API zu konfigurieren, kann eine solche Abbildung dynamisch vorgenommen werden und so ermöglichen, mehrere IPv6-Adressen der Entscheidereinheit unter Verwendung einer einzelnen IPv4-Adresse zugreifbar zu machen. Das Verfahren läuft hierbei wie folgt ab:
1. Über die API wird definiert, welches IPv6-Endgerät auf die IPv4-Adresse abgebildet wird, und
2. eine Kommunikation unter Verwendung der IPv4-Adresse wird durchgeführt, wobei danach erneut mit Punkt 1 begonnen wird.

Dies soll anhand des nachfolgenden Beispiels verdeutlicht werden. Ein Endanwender hat eine hohe Anzahl von IPv6-Sensorendgeräten, die durch einen zentralen Steuerserver (unregelmäßig) bei Bedarf kontaktiert werden. Weiter wird angenommen, dass der Steuerserver mit dem Internet nur für das IPv4-Protokoll kommuniziert. Falls Verbindungen durch den Steuerserver initiiert werden sollen, werden IPv4-Zieladressen benötigt. Aufgrund der Knappheit globaler IPv4-Adressen ist es nicht machbar, jedem Endgerät eine IPv4-Adresse zuzuweisen. Die Lösung hierfür ist die Verwendung einer einzelnen, globalen IPv4-Adresse als Zieladresse und vor dem Erstellen über die API zu definieren, welches IPv6-Endgeräte die Adresse abbilden soll. Dies ermöglicht den Zugriff auf eine große Anzahl von Endgeräten während nur eine geringe Anzahl von IPv4-Adressen verwendet wird.

Dieses Verfahren lässt sich noch weiter verbessern. Anstelle des pseudostatischen oder statischen Zuweisens von IPv4-Adressen an Mobilteilnehmer werden Adressen eines dynamischen, privaten IPv4-Pools verwendet. Beim Erstellen der Sitzung ist es dann erforderlich, die Abbildung zwischen den stabilen IPv4-Adressen und den dynamischen IPv4-Adressen dynamisch zu aktualisieren. All diese dynamischen Zuweisungen werden einem externen IPv6-Endgerät transparent, da es mit dem IPv4-Kommunikationspartner unter Verwendung seiner gleichbleibenden IPv6-Adresse kommunizieren kann.

IP-Adressen dienen verschiedenen Zwecken. Sie dienen als Kennung für Netzwerkschnittstellen ("mit wem möchte ich sprechen"); können jedoch auch als Positionierhilfe ("wo finde ich meinen Kommunikationspartner") dienen. Das Verwenden gleicher Adressen für beide Zwecke kann Probleme verursachen, bspw. in Multi-Homing-Szenarien. Für den Zweck einer endanwenderspezifischen Entscheidereinheit stellt es eine interessante Option dar, einen endanwenderspezifischen IP-Adressraum zu nutzen, um eine statische Präfixabbildung (bspw. nach RFC6296) von einem beliebigen externen Netzwerkadressbereich durchzuführen, das zur Kommunikation mit einem Endgerät eines Endanwenders genutzt wird, auf einen Bereich dieses Endanwender-IP-Adressraums. In einer Multibetreiberumgebung ermöglicht dies dem Endanwender Provider eines verbundenen Netzwerks leicht zu tauschen, ohne auf den neuen IP-Adressbereich, der die Kommunikation zwischen seinen Endgeräten betrifft, weiter eingehen zu müssen. Neben global routbaren IPv6-Adressen würden sich auch sogenannte UL-Adressen (vgl. RFC4193) gut eignen, um als gleichbleibender Endanwenderadressbereich zu dienen.

Neben der Aufgabe zu kontrollieren welche Endgeräte mit anderen Endgeräten kommunizieren können, kann die Entscheidereinheit Kommunikation mit erweiterten Firewallregeln steuern. Wird bspw. das Linux-Betriebssystem auf der Entscheidereinheit verwendet, können alle Fähigkeiten des Linux-Kernels und IP-Tables /Netfilter über die API und/oder das Web-Frontend in einer kontrollierten Art und Weise zugänglich gemacht und freigelegt werden.

Darüber hinaus können die Firewallregeln "on the fly" angepasst werden. Zum Beispiel kann die Firewall der Entscheidereinheit eine Applikationslevel-Firewall sein, die bei Bedarf dynamisch Regeln hinzufügt oder löscht. Ein Beispiel wäre ein Sitzungserstellungsverfahren (SIP, WebRTC, etc.), das einen Port zum Erstellen eines Mediastreams eröffnet. Die Entscheidereinheit kann als Gateway in Richtung des Internets dienen. Jeder Standard für eine solche Gateway-Vorrichtung kann unterstützt werden. Eine herkömmliche Fähigkeit ist es die Port-Weiterleitungen bei Bedarf konfigurieren zu können, bspw. Verwenden des Internet-Gateway-Vorrichtungsprotokolls (das beim UPnP-Standard verwendet wird) oder das NAT-Port-Abbildungsprotokoll (NAT-PNP, RFC6886).

Festnetzbetreiber können die Verbindungen ihrer Teilnehmerendgeräte (= CPE, costumer premises equipment) in der Entscheidereinheit des Endanwenders anstelle des Internets enden lassen. Der Tunnel-Endpunkt ist hier nicht auf einem virtuellen Heim-Gateway platziert, der im Internet sitzt, sondern ist in die Entscheidereinheit (den Network Namespace des Endanwenders) bewegt worden.

Das verhindert den Bedarf einen Overlay-VPN-Tunnel zwischen dem Teilnehmerendgerät (CPE) und der Entscheidereinheit herzustellen, um dasselbe Ergebnis zu erreichen.

Neben einem einzelnen Network Namespace, der als der Kern einer Entscheidereinheit eines Endanwenders dient, kann ein zweiter Network Namespace mit derselben Konfiguration aufgesetzt werden. Für den Fall eines Fehlers des Knotens, auf den der Network Namespace des Endanwenders läuft, wird der dahin geleitete Datenverkehr umkonfiguriert, so dass dieser an den zuvor passiven Knoten gerichtet ist. Damit ist ein Mechanismus geschaffen, der im Falle eines Fehlers schnell Abhilfe leistet und die Verfügbarkeit beträchtlich steigert. Das oben beschriebene Konzept für die Aktiv-Passiv-Redundanz kann verwendet werden, um eine gesteuerte Migration von einem Knoten zu einem anderen umzusetzen. Dies ist hilfreich beim Durchführen von Wartungsaktivitäten und beim Ersetzen von Hardware.

## Patentansprüche

1. Endanwenderspezifisches virtuelles globales Netzwerk, umfassend:
mindestens ein netzwerkfähiges Endgerät (1, 2) eines Endanwenders,
eine Datenbank (10) mit einem Verzeichnis für jeden Endanwender, in dem mehrere netzwerkfähige Endgeräte (1, 2) des Endanwenders mit ihrer zugehörigen IP-Adresse hinterlegt sind, und
eine Entscheidereinheit (20), die dazu ausgelegt ist, festzulegen, welches der Endgeräte (1, 2) untereinander und/oder mit anderen Netzwerken in Kommunikation treten darf, wobei das endanwenderspezifische virtuelle globale Netzwerk so konfiguriert ist, dass
eine von dem Endgerät (1, 2) ausgehende und/oder an das Endgerät (1, 2) gerichtete Kommunikation über die Entscheidereinheit (20) geroutet wird, und
die Entscheidereinheit (20) konfiguriert ist, unter Rückgriff auf die Datenbank (10) den Datenverkehr unterschiedlicher Endanwender aufgrund eines endanwenderspezifischen Merkmals im Datenverkehr zu trennen,
**dadurch gekennzeichnet,**
**dass** das endanwenderspezifische virtuelle globale Netzwerk konfiguriert ist, die von dem Endgerät (1, 2) ausgehende und/oder an das Endgerät (1, 2) gerichtete Kommunikation über die Entscheidereinheit (20) gemäß einer Nabe-Speiche-Architektur zu routen, bei der die Entscheidereinheit (20) die Nabe darstellt und die Entscheidereinheit (20) weiterhin konfiguriert ist, das Trennen des Datenverkehrs unterschiedlicher Endanwender basierend auf dem Merkmal Quell-IP-Adresse und/oder Ziel-IP-Adresse durchzuführen, wobei die Quell-IP-Adresse, die Ziel-IP-Adresse oder beide zum Zwecke der Trennung in dem Verzeichnis der Datenbank für den Endanwender enthalten sind.

2. Netzwerk nach einem der vorhergehenden Ansprüche, wobei die Entscheidereinheit (20) bei der Festlegung, welches der Endgeräte (1, 2) untereinander und/oder mit anderen Netzwerken in Kommunikation treten darf, einstellbar ist, vorzugsweise über eine von dem Endanwender zugreifbaren Schnittstelle (40), so dass die Zulässigkeit eines Kommunikationspfads zwischen Endgeräten (1, 2) und/oder anderen Netzwerken durch den Endanwender vorgebbar ist.

3. Netzwerk nach einem der vorhergehenden Ansprüche, wobei die Entscheidereinheit (20) dazu eingerichtet ist, das Trennen des Datenverkehrs unterschiedlicher Endanwender zusätzlich basierend auf der Klassifizierung eines "Service Function Chaining" Classifiers vorzunehmen und/oder durch separate Routing-Tabellen auszuführen.

4. Netzwerk nach Anspruch 3, wobei die separaten Routing-Tabellen für vom Endgerät (1, 2) ausgehende und an das Endgerät (1, 2) gerichtete Kommunikation unterschiedlich sind.

5. Netzwerk nach einem der vorhergehenden Ansprüche, wobei die Entscheidereinheit (20) dazu ausgelegt ist, endanwenderspezifische IPv4-Datenpakete mit über mehrere Endanwender hinweg nicht eindeutigen IPv4-Adressen zustandslos unter Rückgriff auf die Daten der Datenbank (10) auf endanwenderspezifische Weise in endanwenderspezifische IPv6-Datenpakete zu übersetzen, um Adresseindeutigkeit über mehrere Endanwender hinweg herzustellen und die Pakete somit ohne weitere Kennzeichnung oder Tunnel über eine gemeinsame Netzwerkinfrastruktur leiten zu können.

6. Netzwerk nach einem der vorhergehenden Ansprüche, wobei die Entscheidereinheit (20) die Funktionalitäten eines Routers und/oder eines anderen Kommunikationsendpunkts wie ein Switch umfasst.

7. Netzwerk nach einem der vorhergehenden Ansprüche, wobei die Entscheidereinheit (20) dazu ausgelegt ist, Prozesse in einer endanwenderspezifischen Netzwerkumgebung auszuführen, vorzugsweise um einen Endpunkt für virtuelle Datentunnel darzustellen.

8. Netzwerk nach einem der vorhergehenden Ansprüche, wobei mehrere Entscheidereinheiten (200) vorgesehen sind, vorzugsweise um eine redundante Ausführung zu schaffen, und eine Kommunikation zwischen mehreren Entscheidereinheiten (200) ermöglicht wird, insbesondere ohne diese Kommunikation über das Internet zu führen.

9. Netzwerk nach einem der vorhergehenden Ansprüche, wobei die Entscheidereinheit (20) dazu ausgelegt ist, für die adress-basierte Trennung ein Policy-basiertes Routingverfahren und/oder Routinglisteneinträge mit Quell-Adress-Filter zu verwenden, vorzugsweise um ein bestimmtes Ziel auf Grundlage der Quell-IP-Adresse zu wählen.

10. Netzwerk nach einem der vorhergehenden Ansprüche, wobei die Entscheidereinheit (20) dazu ausgelegt ist, auf einer gemeinsamen Infrastruktur abzulaufen, vorzugsweise in Form einer virtuellen Einheit (200a).

11. Netzwerk nach einem der vorhergehenden Ansprüche, wobei das Netzwerk dazu eingerichtet ist, in der Datenbank (10) einem mobilfunkfähigen Endgerät (1, 2) eine pseudo-statische oder statische IP-Adresse zuzuweisen, um anhand dieser IP-Adresse ein Netzwerkinterface zu identifizieren und den für ein Endgerät (1, 2) bestimmten Datenverkehr zu separieren.

12. Netzwerk nach einem der vorhergehenden Ansprüche, wobei die Entscheidereinheit (20) das IPv4-Protokoll und/oder das IPv6-Protokoll unterstützt und/oder einen Mobile-IP-Heimatagent umfasst und/oder die Funktionalitäten einer Firewall umfasst.

13. Netzwerk nach einem der vorhergehenden Ansprüche, wobei die Datenbank (10) ferner ein Verzeichnis umfasst, in dem ein IPv4-Endgerät mit einer jeweiligen IPv6-Adresse verknüpft ist, und die Entscheidereinheit (20) dazu ausgelegt ist, ein an das IPv4-Endgerät gerichtetes IPv6-Datenpaket unter Rückgriff auf die Datenbank (10) auf ein IPv4-Datenpaket abzubilden , wobei vorzugsweise die Datenbank (10) ferner ein Verzeichnis umfasst, in dem die IPv6-Quell-IP-Adresse, die in einer Kommunikation mit einem IPv4-Endgerät steht, mit einer IPv4-Quell-IP-Adresse verknüpft ist, und die Entscheidereinheit (20) beim Weiterleiten einer Kommunikation von IPv6 nach IPv4 dazu ausgelegt ist, sowohl die IPv6-Quell-IP-Adresse als auch die IPv6-Ziel-IP-Adresse unter Rückgriff auf die Datenbank (10) 1:1 auf IPv4-Adressen abzubilden, wobei vorzugsweise die Abbildung von IPv6-Adressen auf IPv4-Adressen dynamisch vor dem Erstellen einer Verbindung in dem Verzeichnis zugewiesen wird.

## Claims

1. An end-user-specific virtual global network, comprising:
at least one network-enabled terminal device (1, 2) of an end user,
a database (10) with a directory for each end user, in which a plurality of network-enabled terminal devices (1, 2) of the end user are stored with their associated IP address, and
a decision unit (20) that is adapted to determine which of the terminal devices (1, 2) is allowed to enter into communication with each other and/or with other networks, wherein the end-user-specific virtual global network is configured in such a way that
communication proceeding from the terminal device (1, 2) and/or directed to the terminal device (1, 2) is routed via the decision unit (20), and
the decision unit (20) is configured to separate the data traffic of different end users due to an end-user-specific feature in the data traffic, by resorting to the database (10),
**characterized in**
**that** the end-user-specific virtual global network is configured to route the communication proceeding from the terminal device (1, 2) and/or directed to the terminal device (1, 2) via the decision unit (20) according to a hub-spoke architecture, in which the decision unit (20) represents the hub, and the decision unit (20) furthermore is configured to perform the separation of the data traffic of different end users based on the feature source IP address and/or destination IP address, wherein the source IP address, the destination IP address or both are contained in the directory of the database for the end user for the purpose of separation.

2. The network according to any of the preceding claims, wherein the decision unit (20), when determining which of the terminal devices (1, 2) is allowed to enter into communication with each other and/or with other networks, is adjustable, preferably via an interface (40) accessible by the end user, so that the permissibility of a communication path between terminal devices (1, 2) and/or other networks can be specified by the end user.

3. The network according to any of the preceding claims, wherein the decision unit (20) is arranged to perform the separation of the data traffic of different end users additionally based on the classification of a "Service Function Chaining" classifier and/or to execute the same by separate routing tables.

4. The network according to claim 3, wherein the separate routing tables are different for communication proceeding from the terminal device (1, 2) and for communication directed to the terminal device (1, 2).

5. The network according to any of the preceding claims, wherein the decision unit (20) is adapted to statelessly translate end-user-specific IPv4 data packets with IPv4 addresses that are not unique across a plurality of end-users into end-user-specific IPv6 data packets by resorting to the data of the database (10) in an end-user-specific way in order to establish address uniqueness across a plurality of end users, thus allowing packets to be routed over a common network infrastructure without the need for further identification or tunnels.

6. The network according to any of the preceding claims, wherein the decision unit (20) comprises the functionalities of a router and/or another communication end point such as a switch.

7. The network according to any of the preceding claims, wherein the decision unit (20) is adapted to execute processes in an end-user-specific network environment, preferably in order to represent an end point for virtual data tunnels.

8. The network according to any of the preceding claims, wherein a plurality of decision units (200) are provided, preferably in order to create a redundant configuration, and communication between a plurality of decision units (200) is enabled, in particular without conducting this communication via the Internet.

9. The network according to any of the preceding claims, wherein the decision unit (20) is adapted to use a policy-based routing method and/or routing list entries with a source address filter for the address-based separation, preferably in order to choose a particular destination on the basis of the source IP address.

10. The network according to any of the preceding claims, wherein the decision unit (20) is adapted to run on a common infrastructure, preferably in the form of a virtual unit (200a).

11. The network according to any of the preceding claims, wherein the network is arranged to assign a pseudo-static or static IP address in the database (10) to a mobile telephony-enabled terminal device (1, 2) in order to identify a network interface with reference to this IP address and to separate the data traffic intended for a terminal device (1, 2).

12. The network according to any of the preceding claims, wherein the decision unit (20) supports the IPv4 protocol and/or the IPv6 protocol and/or comprises a mobile IP home agent and/or comprises the functionalities of a firewall.

13. The network according to any of the preceding claims, wherein the database (10) furthermore comprises a directory in which an IPv4 terminal device is linked with a respective IPv6 address, and the decision unit (20) is adapted to map an IPv6 data packet directed to the IPv4 terminal device onto an IPv4 data packet by resorting to the database (10), wherein preferably the database (10) furthermore comprises a directory in which the IPv6 source IP address, which is in communication with an IPv4 terminal device, is linked with an IPv4 source IP address, and when forwarding a communication from IPv6 to IPv4, the decision unit (20) is adapted to map both the IPv6 source IP address and the IPv6 destination IP address 1:1 onto IPv4 addresses by resorting to the database (10), wherein preferably the mapping of IPv6 addresses onto IPv4 addresses is assigned dynamically before creating a connection in the directory.

## Revendications

1. Réseau global virtuel spécifique à l'utilisateur final, comprenant :
au moins un terminal capable de fonctionner en réseau (1, 2) d'un utilisateur final,
une base de données (10) avec un répertoire pour chaque utilisateur final, dans lequel plusieurs terminaux capables de fonctionner en réseau (1, 2) de l'utilisateur final sont mis en mémoire avec leur adresse IP associée, et
une unité de décision (20), qui est adaptée pour déterminer lequel des terminaux (1, 2) est autorisé à communiquer entre eux et/ou avec d'autres réseaux, le réseau global virtuel spécifique à l'utilisateur final étant configuré de telle sorte que
une communication sortant du terminal (1, 2) et/ou dirigée vers le terminal (1, 2) est routée via l'unité de décision (20), et
l'unité de décision (20) est configurée pour séparer le trafic de données de différents utilisateurs finaux sur la base d'une caractéristique spécifique à l'utilisateur final dans le trafic de données en s'appuyant sur la base de données (10),
**caractérisé en ce que**
le réseau global virtuel spécifique à l'utilisateur final est configuré pour router la communication sortant du terminal (1, 2) et/ou dirigée vers le terminal (1, 2) via l'unité de décision (20) selon une architecture de type moyeu/rayon, dans laquelle l'unité de décision (20) représente le moyeu et l'unité de décision (20) est en outre configurée pour réaliser la séparation du trafic de données de différents utilisateurs finaux sur la base de la caractéristique de l'adresse IP source et/ou de l'adresse IP de destination, dans lequel l'adresse IP source, l'adresse IP de destination ou les deux sont incluses dans le répertoire de la base de données pour l'utilisateur final aux fins de la séparation.

2. Réseau selon l'une quelconque des revendications précédentes, dans lequel l'unité de décision (20) est réglable pour déterminer lequel des terminaux (1, 2) est autorisé à communiquer entre eux et/ou avec d'autres réseaux, de préférence via une interface (40) accessible par l'utilisateur final, de sorte que l'admissibilité d'un chemin de communication entre des terminaux (1, 2) et/ou d'autres réseaux peut être prédéterminée par l'utilisateur final.

3. Réseau selon l'une quelconque des revendications précédentes, dans lequel l'unité de décision (20) est adaptée pour réaliser la séparation du trafic de données de différents utilisateurs finaux en se basant en outre sur la classification d'un classificateur de « chaînage de fonctions de service » et/ou pour la réaliser par des tables de routage distinctes.

4. Réseau selon la revendication 3, dans lequel les tables de routage séparées sont différentes pour la communication sortant du terminal (1, 2) et la communication dirigée vers le terminal (1, 2).

5. Réseau selon l'une quelconque des revendications précédentes, dans lequel l'unité de décision (20) est adaptée pour traduire des paquets de données IPv4 spécifiques à un utilisateur final avec des adresses IPv4 qui ne sont pas uniques à travers de plusieurs utilisateurs finaux en paquets de données IPv6 spécifiques à un utilisateur final d'une manière sans état en s'appuyant sur les données de la base de données (10) d'une manière spécifique à un utilisateur final pour établir l'unicité d'adresse à travers de plusieurs utilisateurs finaux et ainsi être capable de router les paquets via une infrastructure de réseau commune sans marquage ou tunnellisation supplémentaire.

6. Réseau selon l'une quelconque des revendications précédentes, dans lequel l'unité de décision (20) comprend les fonctionnalités d'un routeur et/ou d'un autre point d'extrémité de communication tel qu'un commutateur.

7. Réseau selon l'une quelconque des revendications précédentes, dans lequel l'unité de décision (20) est adaptée pour exécuter des processus dans un environnement de réseau spécifique à un utilisateur final, de préférence pour représenter un point d'extrémité pour des tunnels de données virtuels.

8. Réseau selon l'une quelconque des revendications précédentes, dans lequel plusieurs unités de décision (200) sont prévues, de préférence pour créer une configuration redondante, et une communication entre plusieurs unités de décision (200) est permise, en particulier sans mener ladite communication sur Internet.

9. Réseau selon l'une quelconque des revendications précédentes, dans lequel l'unité de décision (20) est adaptée pour utiliser une méthode de routage basée sur une politique et/ou des entrées de liste de routage avec un filtre d'adresse source pour la séparation basée sur l'adresse, de préférence pour choisir une destination spécifique basée sur l'adresse IP source.

10. Réseau selon l'une quelconque des revendications précédentes, dans lequel l'unité de décision (20) est adaptée pour fonctionner sur une infrastructure commune, de préférence sous forme d'une unité virtuelle (200a).

11. Réseau selon l'une quelconque des revendications précédentes, dans lequel le réseau est agencé pour attribuer une adresse IP pseudo-statique ou statique à un terminal (1, 2) permettant un mode cellulaire dans la base de données (10) afin d'identifier une interface réseau sur la base de cette adresse IP et de séparer le trafic de données destiné à un terminal (1, 2).

12. Réseau selon l'une quelconque des revendications précédentes, dans lequel l'unité de décision (20) supporte le protocole IPv4 et/ou le protocole IPv6 et/ou comprend un agent d'accueil IP mobile et/ou comprend les fonctionnalités d'un pare-feu.

13. Réseau selon l'une quelconque des revendications précédentes, dans lequel la base de données (10) comprend en outre un répertoire dans lequel un terminal IPv4 est lié à une adresse IPv6 respective, et l'unité de décision (20) est adaptée pour mapper un paquet de données IPv6 dirigé vers le terminal IPv4 en un paquet de données IPv4 en utilisant la base de données (10), dans lequel de préférence la base de données (10) comprend en outre un répertoire dans lequel l'adresse IP source Ipv6, qui est en communication avec un terminal IPv4, est liée à une adresse IP source IPv4, et l'unité de décision (20), lors du transfert d'une communication d'IPv6 à IPv4, est adaptée pour mapper à la fois l'adresse IP source IPv6 et l'adresse IP de destination IPv6 en adresses IPv4 en utilisant la base de données (10) 1 :1, dans lequel de préférence le mappage d'adresses IPv6 en adresses IPv4 est attribué dynamiquement dans le répertoire avant l'établissement d'une connexion.
